# EUROPEAN PATENT APPLICATION

(11) **EP 3 050 669 A1**
(43) Date of publication of application: **03.08.2016**
(21) Application number: 16152486.3
(22) Date of filing: 22.01.2016
(51) Int. Cl.: B23Q 1/52, B23Q 3/06, B23K 37/04

(54) **A DEVICE FOR CLAMPING AND ROTATING AROUND THE LONGITUDINAL AXIS OF ELONGATE TUBES AND PROFILES**

(30) Priority: 22.01.2015 NL 2014173
(71) Applicant: Erlo BV, 5975 NM Sevenum (NL)
(72) Inventor: Zelis, Pieter Willem Jozef, 5975 NM Sevenum (NL)
(74) Representative: Verhees, Godefridus Josephus Maria

(57) **Abstract**

An arrangement 1 comprises a frame 3 having a bearing-mounted ring-shaped carrier 5 whose axis 7 is horizontally oriented. This carrier forms part of rotary means for rotating a tube or profile 8a round their axis. These rotary means further include drive means (electromotor 9) for rotating the carrier. The carrier 5 has a ring-shaped guide consisting of two arc sections 11A and 11B which are hingedly connected to each other by one end 11c and are detachably coupled to each other by the other end 11d. This guide may be provided with for example a toothed profile 15 which engages a gear 13 on the output shaft of the electromotor. The smaller of the two arc sections 11B is movable by a solenoid 17 between a closed position (as shown) and an open position (indicated by broken lines) for radially feeding (arrow 19) a tube or a profile.

## Description

### Field of the invention

The invention relates to an arrangement for clamping and rotating tubes and elongated profiles round the longitudinal axis, comprising:
- a frame,
- clamping means for clamping a tube or a profile, and
- rotary means for rotating the clamping means round the axis of the tube or the frame, which rotary means are connected to the frame and comprise a ring-shaped carrier, which carrier is bearing-mounted in a rotatable manner round the axis in or on the frame, where the clamping means are connected to the carrier, or which carrier is fitted to the frame and forms a rail along which the clamping means can be moved, which carrier comprises two arc sections which are hingedly connected to each other by one end, and are detachably connected to each other by the other end.

### State of the art

An arrangement of this type is known from EP 2 584 191 A. By rotating the one preferably small arc section relative to the other large arc section, the ring shape at the location of the small arc section is interrupted/opened so that the tubes or profiles can be fed to the carrier in radial direction in lieu of in axial direction as is the case in the known arrangement. This is particularly advantageous if the rotary means further include a further ring-shaped carrier, where the two carriers are spaced apart from each other in axial direction, for retaining the tube or profile at two places spaced apart from each other in axial direction. This does not necessitate the need for manoeuvring space in axial direction behind the arrangements over a distance of the length of the tubes or profiles to be clamped. Only beside the arrangements is space needed for the tubes or profiles to be processed. This known arrangement is specifically intended for clamping rotor blades of wind turbines. The clamping means of the known arrangement are less suitable for properly clamping profiles of different cross-sections.

### Summary of the invention

It is an object of the invention to provide an arrangement of the type defined in the opening paragraph in which tubes or profiles can be clamped better. For this purpose the arrangement according to the invention is characterized in that the clamping means comprise two clamp jaws which are movably connected to the carrier at two places at any rate substantially across from each other, as well as moving means for moving the clamp jaws toward each other and away from each other, where each clamp jaw comprises two clamp elements and where at least one of the clamp jaws has one of the clamp elements that is movable against a spring force. As a result, as well as being able to clamp tubes or profiles having a square cross section, it is possible to clamp tubes or profiles having a rectangular cross section.

In the case where the carrier forms a rail, the clamping means may be fitted to a C-shaped carriage which is movable alongside the rail. When a tube or profile is to be fed radially to the clamping means, this carriage is to be located at the movable part of the rail that is hingedly connected to the fixed part of the rail. Preferably, however, the carrier is bearing-mounted in the frame and the carrier is rotated relative to the frame by the rotary means.

The rotary means may be formed by an electromotor which is located on the frame and has on the output shaft a gear that cooperates with a circular toothed rack fixed to the carrier.

It should be observed that clamping means provided with such clamp jaws may also be used for an arrangement for clamping and rotating round the longitudinal axis tubes and elongated profiles, which arrangement is not provided with a carrier consisting of two parts as described above. The clamp elements are each provided with a clamp face, while the two clamp faces are positioned at right angles to each other and one of the clamp faces is movable against the spring force in a direction parallel to the other clamp face.

An embodiment of the arrangement according to the invention is characterized in that each clamp jaw is fitted to the end of a straight arm, which arms are movable in longitudinal direction relative to the carrier.

A further embodiment of the arrangement according to the invention is characterized in that the arms are formed by toothed racks engaging gears and are each movable through openings in the carrier in at any rate substantially radial direction of the carrier.

Yet a further embodiment of the arrangement according to the invention is characterized in that the two gears are driven by a single electromotor which is connected to the two gears by means of a single belt, so that the same force is applied to the two gears and both gears rotate at the same speed. Since both clamp jaws are moved toward each other at the same speed during the clamping of a tube or profile, it is also achieved that a tube or profile after the clamping operation is concentric with the ring-shaped carrier.

### Brief description of the drawing figures

The invention will be further described below in more detail with reference to an example of embodiment of the arrangement according to the invention represented in the drawing figures, in which:
Figure 1 gives a perspective view of an embodiment of the arrangement according to the invention;
Figure 2 shows a cut-away view of the arrangement shown in Fig. 1;
Figure 3 shows the arrangement shown in Fig. 1, where the carrier is shown in a transparent perspective view from a first angle; and
Figure 4 shows the arrangement shown in Fig. 1, where the carrier is shown in a transparent perspective view from a different, second angle.

### Detailed description of the drawing figures

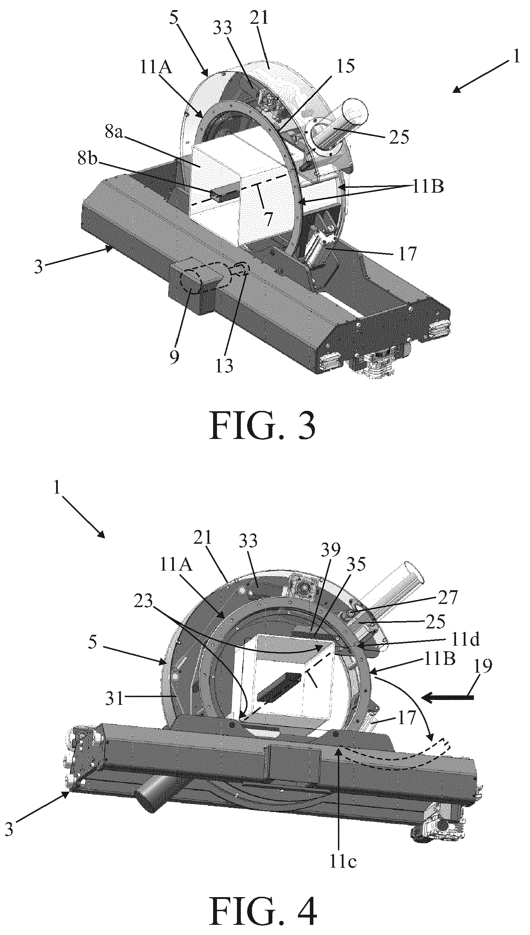

The figures give a perspective view from different angles of an embodiment of the arrangement according to the invention. The arrangement 1 comprises a frame 3 and bearing-mounted on it a ring-shaped carrier 5 whose axis 7 is horizontally oriented. This carrier forms part of rotary means for rotating round their axis a tube or elongated profile 8a, 8b (profile 8b is represented only by way of illustration to indicate that also profiles having such a small cross section can be clamped). These rotary means further include drive means , for example, formed by an electromotor 9 for rotating the carrier. The carrier 5 has a ring-shaped guide formed by two arc sections 11A and 11B which hingedly are connected to each other by one end 11c (see Fig. 4) and are detachably coupled to each other by the other end 11d. This guide may be provided with, for example, a toothed profile 15 which engages a gear 13 on the output shaft of the electromotor 9. The smaller of the two arc sections 11B is movable by a solenoid 17 between a closed position (as is shown in the Figures) in which the two arc sections form a closed ring and an open position (shown in broken lines in Fig. 4) in which the ring is open at a spot for radial input (arrow 19 in Fig. 4) of a tube or profile. The larger of the two arc sections 11A of the guide has a housing 21 which is concentric with this arc section. The smaller arc section 11B of the two does not have a housing.

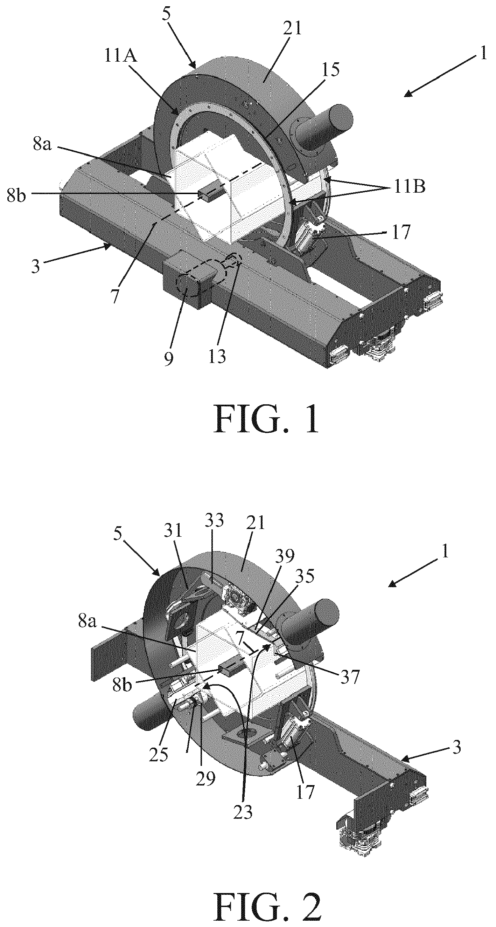

The arrangement 1 further includes clamping means for clamping the tube or profile 8a, 8b. These clamping means comprise each two clamp jaws 23 which are movably connected to the carrier 5 at two oppositely disposed locations. The clamping means further include moving means for moving the clamp jaws toward each other and away from each other. These moving means are formed by a straight arm 25 one end of which is equipped with clamp jaws 23. This arm 25 is provided with a toothed edge and forms a toothed rack that engages a gear 27 which is present on a shaft together with a pulley 29 (see Fig. 2) and is driven by a belt 31. In this manner the arms 25 can be moved in radial direction relative to the carrier 5. The gears 27 for moving the arms of the two clamping means are driven via one belt 31 by a single electromotor 33. The gears, the belt drive and the electromotor are accommodated in the housing 21.

Each clamp jaw 23 comprises two clamp elements 35 (see Fig. 2) which are each provided with a clamp face. These two clamp faces are at right angles to each other, where one of the clamp faces is movable in a direction parallel to the other clamp face. The movable clamp face is located on the clamp element 35 which is slidable in a U-profile 39 (see also Fig. 4). Between the U-profile and the clamp element are fitted one or more springs, as a result of which the clamp element is movable against a spring force.

Albeit the invention has been elucidated in the foregoing with reference to the drawing figures, it should be set out that the invention is not by any manner or means restricted to the embodiments shown in the drawing figures. The invention also extends to any embodiments deviating from the embodiment shown in the drawing figures within the scope defined by the claims.

## Claims

1. An arrangement (1) for clamping and rotating tubes and elongated profiles (8a, 8b) round the longitudinal axis, comprising:
- a frame (3),
- clamping means for clamping a tube or a profile, and
- rotary means for rotating the clamping means round the axis (7) of the tube or the frame, which rotary means are connected to the frame and comprise a ring-shaped carrier (5), which carrier is bearing-mounted in a rotatable manner round the axis in or on the frame, where the clamping means are connected to the carrier, or which carrier is fitted to the frame and forms a rail along which the clamping means can be moved, which carrier (5) comprises two arc sections (11A, 11B) which are hingedly connected to each other by one end (11c), and are detachably connected to each other by the other end (11d),
**characterized in that** the clamping means comprise two clamp jaws (23) which are movably connected to the carrier (5) at two places at any rate substantially across from each other, as well as moving means for moving the clamp jaws toward each other and away from each other, where each clamp jaw comprises two clamp elements (35, 37) and where at least one of the clamp jaws has one of the clamp elements (35) that is movable against a spring force.

2. An arrangement as claimed in claim 1, **characterized in that** the clamp elements (35, 37) are each provided with a clamp face, while the two clamp faces are positioned at right angles to each other and one of the clamp faces is movable against the spring force in a direction parallel to the other clamp face.

3. An arrangement as claimed in claim 1 or 2, **characterized in that** each clamp jaw (23) is fitted to the end of a straight arm (25), which arms are movable in longitudinal direction relative to the carrier (5).

4. An arrangement as claimed in claim 3, **characterized in that** the arms (25) are formed by toothed racks engaging gears (27) and are each movable in at any rate substantially radial direction of the carrier (5).

5. An arrangement as claimed in claim 4, **characterized in that** the two gears (27) are driven by a single electromotor (33) which is connected to the two gears by means of a single belt (31).

6. An arrangement as claimed in any one of the preceding claims, **characterized in that** the rotary means further include a further ring-shaped carrier, where the two carriers are spaced apart from each other in axial direction.
